# DEMANDE DE BREVET EUROPEEN

(11) **EP 0 903 196 A1**
(43) Date de publication de la demande: **24.03.1999**
(21) Numéro de dépôt: 98420158.2
(22) Date de dépôt: 11.09.1998
(51) Int. Cl.: B23K 9/12

(54) **Procédé et dispositif pour alimenter en fil d'apport une torche de soudage tig**

(30) Priorité: 11.09.1997 FR 9711537
(71) Demandeur: Elektrosta, 69120 Vaulx en Velin (FR)
(72) Inventeur: Fombonne, Jacques, 69003 Lyon (FR); Lacour, Jean-Claude, 42210 Montrond les Bains (FR)
(74) Mandataire: Guerre, Dominique

(57) **Abrégé**

Le procédé consiste à déplacer le fil d'apport suivant une succession de séquences comprenant, au moins les phases suivantes, a) accélération de V0 à V1, b) avance à vitesse V1, c) décélération de V1 à V0, d) arrêt sur une durée inférieure à celle du palier b).

Le dispositif met en oeuvre un moteur électrique pas à pas (30) piloté par un programmateur (55) contenant un microprocesseur (56) et une mémoire (57) contenant, pour chaque matière et diamètre du fil d'apport (11), les paramètres d'alimentation du moteur (30) définis par expérimentation à partir des données de soudage, à savoir sens de rotation, valeur et durée des accélérations et décélérations, valeur et durée de la ou des vitesses de rotation, et durée des arrêts, ces paramètres étant traitées par au moins un programme de base qui, selon les indications d'un sélecteur manuel (66) de la matière et du diamètre du fil d'apport, communique à l'unité de commande (52) une suite d'instructions procurant la séquence de mouvements choisie.

## Description

L'invention est relative à un procédé et à un dispositif pour alimenter en fil d'apport une torche de soudage TIG.

Elle concerne donc les torches dans lesquelles l'arc électrique est généré entre la ou les pièces à souder ou à recharger et une électrode infusible, distincte d'un fil d'apport dont la matière est adaptée à celle de la soudure et dont le diamètre est défini par l'importance du cordon de soudure devant être réalisée. La soudure s'effectue sous gaz inerte distribué par la torche.

Cette technique TIG, qui est différente de celle MIG dans laquelle le fil d'apport constitue également électrode, permet d'obtenir des soudures ou rechargement de très haute qualité, que la torche soit déplacée manuellement ou automatiquement. La torche est disposée à l'extrémité d'une gaine contenant plusieurs conduits pour son alimentation en électricité, en gaz inerte, en fluide de refroidissement et en fil d'apport. Ce fil provient d'un caisson, fixe ou mobile, contenant des moyens d'entraînement assurant son déplacement suivant une succession de séquences lui communiquant des mouvements proches de ceux qui sont communiqués manuellement à une baguette d'apport lors d'une opération de soudage manuelle.

Il faut préciser que, lors du soudage manuel, le déplacement manuel de la baguette s'effectue suivant un mouvement séquentiel comprenant :
- une avance rapide amenant l'extrémité de la baguette d'apport à proximité de l'arc, sans que celui-ci ne provoque, même par rayonnement, un échauffement trop important de la baguette, ce qui aurait pour conséquence, de former une boule fondue à l'extrémité de la baguette, et pour inconvénient, dans la séquence suivante, de conduire à un apport trop important de métal, refroidissant le bain et altérant la soudure,
- une avance lente amenant la baguette dans le bain de fusion et entraînant la fusion localisée de la baguette et son mélange avec le métal fondu du bain formé par fusion du support,
- et un retour rapide dégageant la baguette du bain de fusion, ce retour étant décidé par l'opérateur lorsque ce bain de fusion a un volume suffisant. Ce retour favorise également le dégazage et la stabilisation du bain.

Dans le soudage manuel, cette séquence est répétée autour de 40 fois par minute. Les valeurs des vitesses et des durées ne sont pas constantes d'une séquence à une autre, puisque définies par l'opérateur, de sorte que la qualité de la soudure peut varier sur la longueur du dépôt.

Pour augmenter cette cadence et obtenir une vitesse de dépôt plus grande, mais aussi pour permettre la réalisation de ce type de soudage par des opérateurs ne maîtrisant pas le maniement de la baguette, de nombreux dévidoirs automatiques ont été réalisés pour déplacer automatiquement le fil d'apport fourni en bobine et circulant sous gaine entre le dévidoir et la torche. Ces dévidoirs comportent des moyens reproduisant, avec plus ou moins de fidélité, les mouvements manuels de déplacement du fil d'apport.

Dans ces dévidoirs, les moyens d'entraînement du fil d'apport comprennent des moyens de dévidage, composés d'au moins un galet d'entraînement et d'au moins un galet presseur appliquant le fil d'apport sur le premier, et de moyens complémentaires communiquant au fil un mouvement alternatif, parallèle au mouvement de dévidage de ce fil, pour ajouter à la vitesse de dévidage du fil d'apport, une vitesse positive ou négative.

Dans la demande de brevet français 2 723 330, ce mouvement est rectiligne et est fourni par une came déplaçant, dans un sens, le support des moyens de dévidage, et par un ressort rappelant ce support dans l'autre sens. Dans la demande de brevet européen 338 583, le mouvement complémentaire est fourni par un excentrique déplaçant le fil d'apport, transversalement à sa trajectoire, entre les moyens de dévidage et un guide-fil. Dans la demande de brevet français 2 518 000, le mouvement supplémentaire est obtenu par la déformation d'une gaine contenant le fil d'apport. Enfin, dans le brevet U.S. 3 581 053, un vibreur agissant sur le support des moyens de dévidage apporte le mouvement supplémentaire.

De tels dispositifs augmentent la vitesse de dépôt et permettent d'obtenir des soudures de qualité, même avec un personnel non spécialisé, mais sous réserve que celui-ci se conforme aux prescriptions de l'appareil.

Ainsi par exemple, si l'opérateur, par paresse, n'adapte pas le diamètre de la gaine au diamètre du fil, et par exemple dispose un fil de petit diamètre dans une gaine prévue pour un fil de plus gros diamètre, le jeu diamétral excessif entre le fil et la gaine absorbe une partie des mouvements du fil, en particulier lors des phases d'avance rapide et de recul rapide. Il en résulte que, parfois et malgré ces mouvements, une boule se forme sur l'extrémité du fil et perturbe la formation du bain et la qualité de la soudure.

L'un des objets de l'invention est de supprimer la formation de cette boule et d'obtenir des soudures de qualité constante.

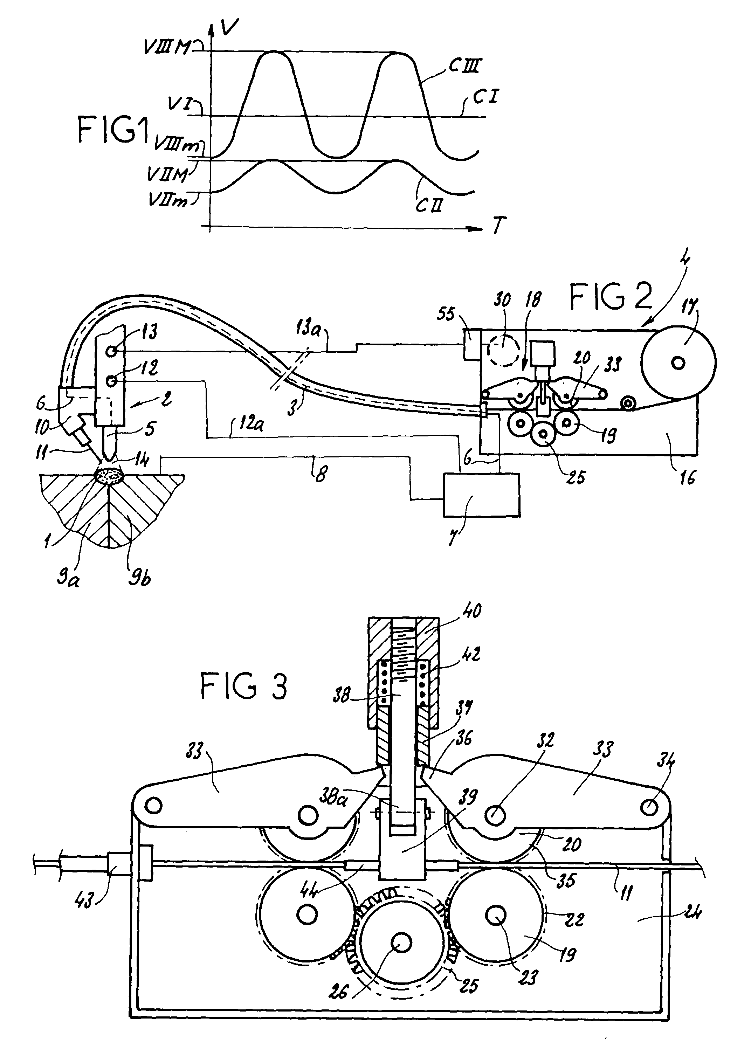

Par ailleurs, l'étude des mouvements procurés par ces dispositifs d'entraînement montre que leur combinaison ne permet pas de reproduire à l'identique le mouvement manuel du soudeur. En effet, et comme le montre le graphique de figure 1, donnant en ordonnées les vitesses d'avance du fil et en abscisses le temps, la combinaison, d'une part, du mouvement uniforme de déplacement longitudinal du fil d'apport, représenté par la courbe CI de vitesse VI avec d'autre part, le mouvement sinusoïdal, représenté par la courbe CII, oscillant entre les valeurs des vitesses, respectivement maximale VIIM et minimale Vllm, forme un mouvement sinusoïdal selon la courbe CIII, oscillant entre une vitesse maximale VIIIM et une vitesse minimale VIIIm. Si la somme de la vitesse uniforme VI et de la vitesse maximale VIIM du mouvement sinusoïdal est toujours positive et conduit donc toujours à une avance rapide du fil d'apport, la somme algébrique des vitesses VI et Vllm conduit à des mouvements variant selon la valeur de Vllm. Si Vllm a une valeur inférieure à VI, comme montré figure 1, la vitesse VIIIm du fil d'apport est positive, ce qui conduit à une vitesse d'avance lente, tandis que, si la valeur absolue de Vllm est supérieure à VI, VIIIm a une valeur inférieure à O, ce qui conduit à un recul du fil, sans avance lente, et que, si Vllm a une valeur égale à VI, VIIIm a une valeur égale à O, ce qui conduit à un arrêt du fil, sans avance lente. On constate donc que, selon la valeur de réglage de VII, on obtient une courbe de mouvements qui, en aucun cas, ne permet d'obtenir un mouvement séquentiel reproduisant les mouvements du soudeur, à savoir avance rapide, avance lente, et retour rapide.

Constatant que, malgré cela, les appareils actuels permettaient de multiplier par 4 la vitesse de dépôt par rapport à celle du soudage manuel, tout en améliorant la qualité de la soudure, la déposante a élaboré un procédé d'entraînement du fil d'apport plus simple à mettre en oeuvre, plus facile à contrôler, et procurant une soudure de qualité améliorée et constante.

Ce procédé d'entraînement consiste à déplacer le fil d'apport suivant une succession de séquences comprenant, chacune, au moins les phases suivantes :
- une accélération de la vitesse nulle V0 à une vitesse constante V1, dite lente,
- un palier d'avance lente dont la vitesse V1 a une valeur réglable, comprise entre 0,03 m/s et 0,15 m/s, amenant le fil d'apport dans le bain en fusion, ce palier ayant une durée dépendant du taux de chargement de la soudure,
- une décélération de vitesse de V1 à V0,
- et une phase d'arrêt dont la durée est inférieure à celle du palier à vitesse lente, de manière que le rayonnement du bain de fusion ne puisse former une boule à l'extrémité du fil d'apport, arrêté en position reculée.

Ce procédé est distinct de celui décrit dans GB-A-661 671 relatif à une torche de soudage MIG, non seulement parce que les séquences sont indépendantes des conditions d'alimentation électrique de l'électrode mais aussi parce que dans chaque séquence la succession des phases est différente et conduit à un mouvement différent.

Les essais réalisés suivant ce procédé, et suivant une plage de fréquence allant de 200 à 600, voir 800 séquences par minute, ont montré que, contrairement à la pratique actuelle cherchant à reproduire les mouvements du soudeur, ce mouvement séquentiel d'avance, dite lente, et d'arrêt, permettait d'obtenir des soudures de bien meilleure qualité et une vitesse de dépôt supérieure à celle obtenue par les dispositifs actuels. Ce mouvement convenant particulièrement bien pour tous les dépôts de rechargement d'une pièce métallique, peut aussi être mis en oeuvre pour l'exécution de soudures.

Dans un autre mode de mise en oeuvre, chaque séquence de déplacement du fil d'apport comprend :
- entre la phase d'accélération et le palier d'avance lente, à vitesse V1, un palier d'avance rapide de vitesse V2 de valeur réglable, et une phase de décélération de V2 à V1,
- et, entre la phase de décélération de V1 à V0 et la phase d'arrêt, une phase d'inversion du sens de déplacement du fil, une phase d'accélération de V0 à V3, une phase de retour rapide de vitesse V3 de valeur réglable, une phase de décélération de V3 à V0 et une phase d'inversion de sens.

La possibilité de réglage de l'avance rapide et du retour rapide permet, pendant le soudage, d'éviter toute formation de boules à l'extrémité du fil.

Cette séquence de déplacement est plus particulièrement destinée aux soudures de très haute qualité ou nécessitant un apport calorifique important risquant d'entraîner la fusion du fil d'apport, lorsqu'il n'est plus en contact avec le bain.

Avantageusement, dans un cycle de soudage, la dernière séquence de déplacement du fil d'apport comprend, juste avant la phase d'arrêt, une phase d'inversion de sens, une phase d'accélération de la vitesse V0 à une vitesse de recul rapide V3, une phase de retrait rapide pour amener l'extrémité du fil dans une position rétractée plus éloignée que la position reculée qu'elle occupe à la fin de chaque séquence, tandis que la première séquence de chaque nouveau cycle d'entraînement du fil comprend, après la phase d'accélération initiale, une augmentation de la durée de la phase d'avance, à vitesse V1 ou V2, pour amener l'extrémité du fil en position de travail.

Lorsque le soudeur arrête le cycle d'entraînement du fil d'apport, mais maintient la torche en position pour assurer l'homogénéisation du bain par l'arc, puis après évanouissement de l'arc, pour assurer la protection du bain par l'émission gazeuse, le retrait du fil en deçà de sa position d'arrêt normal empêche que l'échauffement excessif parvienne à former une boule à son extrémité. Cela évite donc, au redémarrage d'un nouveau cycle de soudure, d'avoir à couper l'extrémité du fil pour enlever la boule de matière. Dans le cas d'une torche disposée sur une machine automatique, ce retrait élimine les inconvénients inhérents à la présence d'une boule, et en particulier que la boule s'oppose à l'extraction de la pièce soudée.

L'invention concerne également un dispositif dans lequel le fil d'apport est dévidé d'une bobine par au moins un équipage de galets comprenant un galet d'entraînement lié en rotation à un moteur électrique, et un galet presseur appliquant le fil d'apport sur le galet d'entraînement.

Dans le dispositif selon l'invention, le moteur électrique d'entraînement est un moteur pas à pas dont l'unité de commande est pilotée par un programmateur contenant un microprocesseur et une mémoire contenant, pour chaque matière et diamètre de fil d'apport, les paramètres d'alimentation du moteur définis expérimentalement à partir des données de soudage, à savoir sens de rotation, valeur et durée des accélérations et décélérations, valeur et durée de la ou des vitesses de rotation, et durée des arrêts, ces paramètres étant traités par au moins un programme de base qui, selon les indications d'un sélecteur manuel de matière et de diamètre du fil d'apport, communique à l'unité de commande, du moteur pas à pas la suite d'instructions suivantes :
- accélération d'une vitesse V0 à une vitesse d'avance lente V1 comprise entre 0,03 m/s et 0,3 m/s,
- maintien de cette vitesse V1 pendant une durée dépendant du taux de chargement de la soudure, mais comprise entre 0,005 et.0,3 seconde,
- décélération de la vitesse V1 à la vitesse V0,
- arrêt de la séquence pendant une durée qui est inférieure à celle du palier à vitesse lente.

Dans une autre forme d'exécution, la mémoire du programmateur comprend, en complément du programme de base, des instructions complémentaires formant un programme complet apte à communiquer à l'unité de commande du moteur pas à pas, et à partir des indications fournies par le sélecteur manuel de la matière et du diamètre d'apport du fil, les paramètres de fonctionnement procurant une séquence de mouvements comprenant les phases suivantes :
- une phase d'accélération a' faisant démarrer le moteur et l'amenant d'une vitesse V0 à une vitesse V2, dite d'avance rapide et dont la valeur est réglable,
- une phase e de maintien de cette vitesse sur un palier dont la durée est réglable,
- une phase de décélération f ramenant la vitesse V2 à une valeur V1, précédemment définie comme étant celle de l'avance lente d'alimentation du bain fondu,
- une phase b' de maintien de cette vitesse V1 sur un palier de valeur réglable et définie par expérimentation,
- une phase de décélération c' amenant le moteur de la vitesse V1 à la vitesse V0,
- une phase g d'inversion du sens de rotation du moteur,
- une phase d'accélération h amenant la vitesse du moteur de la valeur V0 à une valeur V3, dite de retour rapide,
- une phase i de maintien de la vitesse V3 sur une durée réglable pour provoquer le recul rapide de l'extrémité du fil d'apport,
- une phase de décélération j ramenant la vitesse de sa valeur V3 à une valeur V0,
- une phase k d'inversion de sens,
- et une phase d'arrêt d', pouvant être confondue avec la phase k) et avoir une valeur nulle.

D'autres caractéristiques et avantages ressortiront de la description qui suit en référence au dessin schématique annexé représentant, à titre d'exemple, une forme d'exécution du dispositif selon l'invention dans le cas de son application à une torche de soudage manuel.
Figure 1 est un graphique représentant la variation de vitesse du fil d'apport dans le temps,
Figure 2 est une vue schématique de côté en élévation montrant les éléments du dispositif d'alimentation en fil d'apport d'une torche,
Figure 3 est une vue de face en élévation avec coupe partielle montrant, à échelle agrandie, le dispositif d'entraînement du fil d'apport,
Figure 4 est une vue de côté en coupe transversale du dispositif d'entraînement de figure 3 avec son schéma fonctionnel de commande,
Figure 5 est un graphique donnant en abscisses la valeur des vitesses lentes pour diverses intensités du courant de l'arc électrique données en ordonnées.
Figures 6 et 7 sont deux diagrammes vitesse/temps représentant le mouvement du fil d'apport selon, respectivement, la séquence simplifiée et la séquence complète,
Figures 8 et 9 sont des diagrammes similaires à ceux des figures 6 et 7, mais montrant les séquences supplémentaires de fin et de début de cycle.

Comme montré à la figure 2, l'installation de soudage TIG est composé d'une torche 2 reliée par un conduit souple 3 à un dévidoir 4. La torche 2 porte une électrode non fusible 5, par exemple en tungstène, raccordée par une branche de circuit 6 à l'une des bornes d'un générateur de courant 7 dont l'autre borne est raccordée par une branche de circuit 8 aux pièces métalliques 9a, 9b. La torche 2 porte latéralement un guide fil 10 pour un fil d'apport 11 qui, amené par une gaine, non représentée, disposée dans le conduit, est mis en mouvement par le dévidoir 4. Cette torche 2 est également reliée par des canalisations disposées dans le conduit 3, respectivement, à un circuit de refroidissement, non représenté, et à un circuit d'alimentation en gaz inerte, non représenté. S'agissant d'une torche à déplacement manuel, elle comporte au moins un contacteur 12 à double action, ou deux contacteurs 12 et 13 reliés par des conducteurs 12a, 13a respectivement au générateur 7 et au dévidoir 4 et déclenchant, respectivement, d'une part la formation d'un arc électrique 14 entre l'électrode 5 et les pièces 9a, 9b et, d'autre part, l'entraînement du fil d'apport 11. Le courant alimentant l'électrode 5 est réglé par des moyens associés au générateur 7, et indépendants de ceux réglant les conditions de déplacement du fil d'apport 11.

Le dévidoir 4 est composé d'un caisson 16, fixe ou monté sur roulettes et supportant une bobine 17 de fil d'apport et des moyens 18 d'entraînement du fil comprenant un double équipage de galets d'entraînement, chaque équipage étant composé d'un galet entraîneur 19 et d'un galet presseur 20.

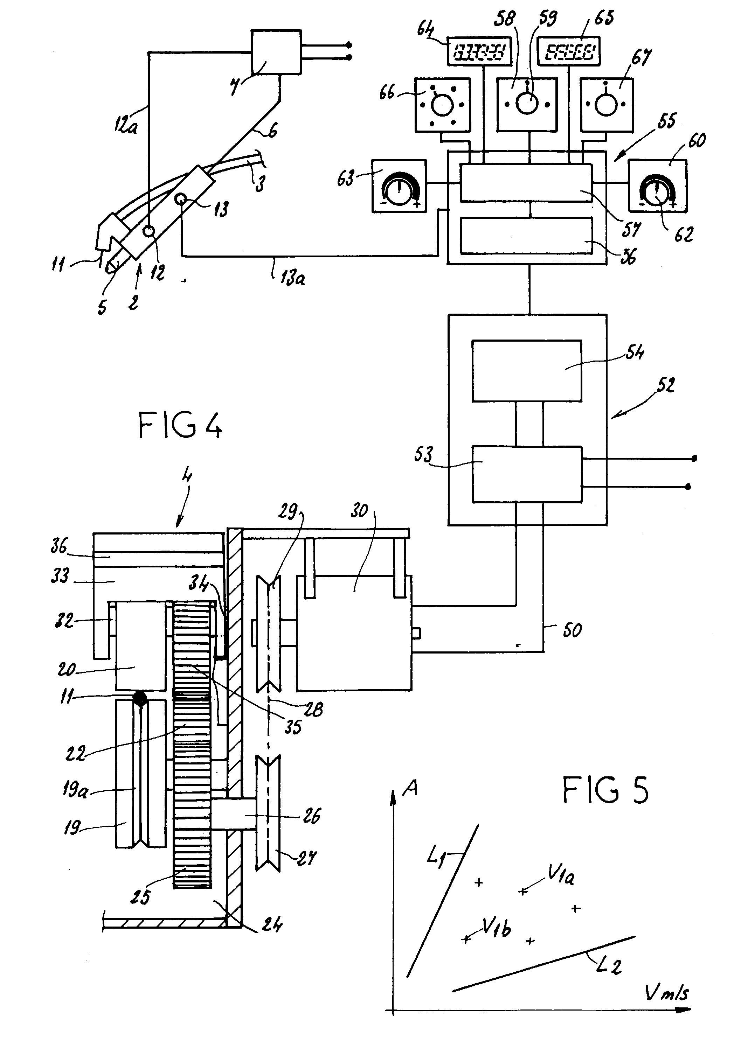

Comme montré plus en détails aux figures 3 et 4, chaque galet 19 est solidaire d'une roue dentée 22 avec laquelle il est monté sur un arbre 23, lui-même monté libre en rotation dans un carter 24. Les roues dentées 22 engrènent avec un pignon moteur commun 25 dont l'arbre 26 est monté libre en rotation dans le carter 24, et est solidaire, comme montré figure 4, d'une poulie crantée 27. Celle-ci est reliée par une courroie crantée 28 à un pignon 29 calé sur l'arbre de sortie d'un moteur électrique 30. Chaque galet presseur 20 est monté libre en rotation sur un axe 32, porté par un levier 33 articulé en 34 sur le carter 24. Le galet est également solidaire d'une roue dentée 35 qui engrène avec la roue dentée 22 sous-jacente.

Dans la forme d'exécution représentée à la figure 3, le levier 33 se prolonge au-delà de l'axe 32 par une patte 36 destinée à recevoir l'appui élastique d'un poussoir 37 à compression réglable. Ce poussoir est monté coulissant sur un boulon à oeil 38 dont l'oeil 38a est articulé dans une chape 39 qui est solidaire du carter 24. A l'extrémité filetée du boulon 38 se visse une poignée de réglage 40. Le vissage de la poignée 40 sur le boulon 38 détermine la compression d'un ressort 42, interposé entre elle et le poussoir 37 et, en conséquence, la pression d'application du poussoir 37 sur les pattes 36 des deux leviers 33. Le fil d'apport 11 qui circule entre les galets entraîneurs 19 et les galets presseurs 20 est guidé par des guides fils extrêmes 43 et par un guide fil central 44. La figure 4 montre que chaque galet entraîneur 19 est muni d'une gorge 19a, de section semi circulaire ou triangulaire, sur les bords de laquelle le fil 11 est appliqué par le galet presseur 20 correspondant.

Toutes ces dispositions sont connues de l'homme de l'art et n'ont pas à être décrites davantage.

Selon l'invention, le moteur 30 est un moteur électrique pas à pas dont le circuit d'alimentation 50 est relié à une carte de commande et de contrôle 52 comprenant une unité de puissance 53 et un indexeur 54 relié, par un circuit interne, à un codeur disposé sur le moteur, et non représenté. Cette carte 52 est elle-même pilotée par un programmateur 55 comprenant un microprocesseur 56 et une mémoire 57. Cette mémoire contient, pour chaque matière de fil d'apport et pour chaque diamètre de fil d'apport, les paramètres d'alimentation du moteur 30, à savoir polarité, ou sens de rotation, valeur et durée des accélérations et des décélérations, et éventuellement de la courbe d'accélération ou de décélération, valeur et durée de la ou des vitesses de rotation, et durée des arrêts. L'ordre de succession de ces paramètres est défini par des programmes régissant les séquences de mouvements, tandis que leurs valeurs mémorisées sont définies par expérimentation dans le cadre d'essais, en prenant en compte les diverses conditions de soudage ou de rechargement.

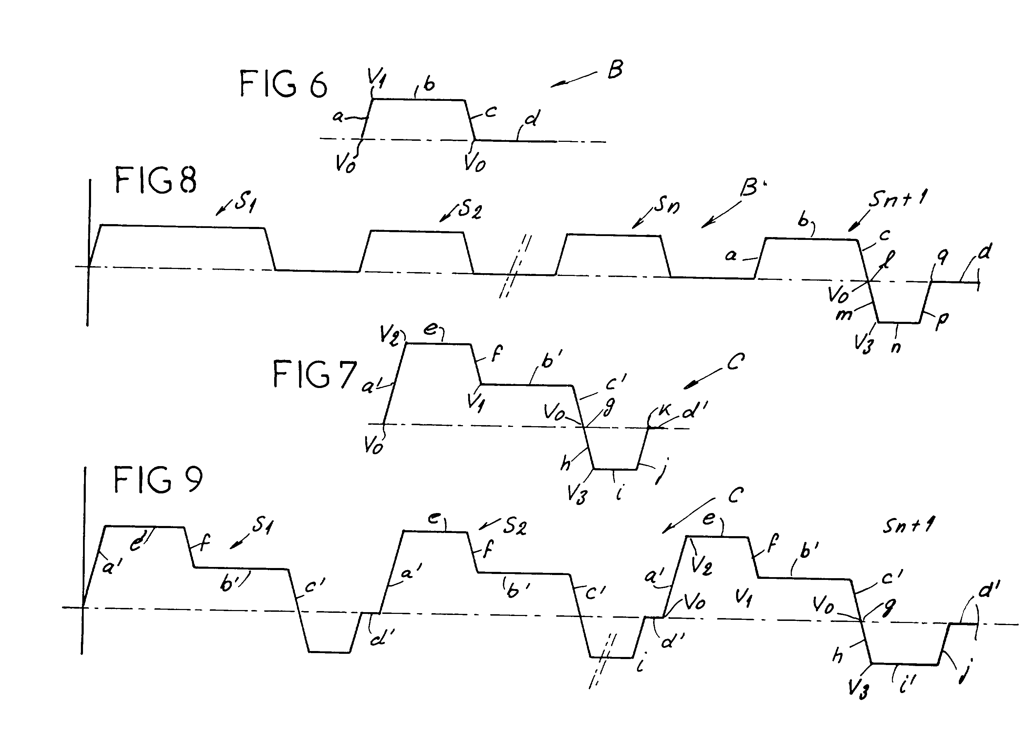

Suivant une caractéristique de l'invention, le programme de base B comprend une succession de séquences dont l'une d'elles est représentée à la figure 6. Cette séquence comprend donc :
- une première phase a consistant à faire démarrer le moteur en accélérant sa vitesse de la valeur nulle V0 à une valeur V1, dite de vitesse lente,
- une phase b consistant à maintenir cette vitesse V1 suivant un palier de durée déterminée, mais réglable,
- une phase c de décélération ramenant la vitesse V1 à la valeur nulle V0,
- une phase d d'arrêt de durée déterminée et réglable.

Cette séquence se répète tant que l'opérateur appuie sur le contacteur 13 de la torche 6 pour commander l'entraînement du fil d'apport 11. La vitesse de déplacement V1 qui varie selon la matière et le diamètre du fil d'apport est comprise entre 0,03 m/s et 0,15 m/s.

Avec ce programme B, le fil d'apport est donc soumis à un mouvement d'avance discontinu au cours duquel il pénètre dans le bain 1, fond, et s'arrête. Le temps d'arrêt est choisi expérimentalement pour que, après fusion de sa partie plongée dans le bain de fusion, son extrémité hors du bain n'ait pas le temps de former une boule. Ce temps d'arrêt est inférieur à la durée de la phase d'avance, à vitesse lente du fil. Selon les applications, il est compris entre 0,01 et 0,1 seconde.

Pour des soudures plus complexes, par exemple nécessitant un apport de chaleur plus important, ce programme de base B est complété pour donner la séquence de mouvements représentée à la figure 7 et comprenant les phases suivantes :
- une phase d'accélération a' faisant démarrer le moteur et l'amenant d'une vitesse nulle V0 à une vitesse V2, dite d'avance rapide et dont la valeur réglable est supérieure à V1,
- une phase e de maintien de cette vitesse V2 sur un palier dont la durée est réglable,
- une phase de décélération f ramenant la vitesse V2 à la valeur V1, précédemment définie comme étant celle de l'avance lente du fil d'apport,
- une phase b' de maintien de cette vitesse V1 sur un palier de valeur réglable et définie par expérimentation, à partir d'une configuration de soudage,
- une phase de décélération c' amenant le moteur de la vitesse V1 à la vitesse nulle V0,
- une phase g d'inversion du sens de rotation du moteur,
- une phase d'accélération h amenant la vitesse du moteur de la valeur V0 à une valeur V3, dite de retour rapide, et ayant une valeur au moins égale à V2,
- une phase i de maintien de la vitesse V3 sur une durée réglable pour provoquer le recul rapide de l'extrémité du fil d'apport,
- une phase de décélération j ramenant la vitesse de sa valeur V3 à la valeur V0,
- une phase k d'inversion de sens,
- et une phase d'arrêt d', pouvant être confondu avec la phase k) et avoir une valeur nulle.

Avec cette séquence complète, le fil d'apport est d'abord soumis à une avance rapide le rapprochant du bain de fusion, puis à une avance à vitesse lente l'engageant dans le bain de fusion pour provoquer sa fusion, et, enfin, à un retour rapide dégageant le fil du bain de fusion et de son environnement. Ce mouvement séquentiel présente l'avantage de reproduire les différentes phases des mouvements humains avec une précision dans les réglages des vitesse, qui est adaptée à chacune des conditions de soudage pouvant être rencontrées et qui ne se retrouve pas dans les dévidoirs actuels. Il en résulte que les soudures sont encore de bien meilleure qualité et peuvent bénéficier d'une vitesse de dépôt supérieure.

La répétition des séquences des programmes B et C dépend des caractéristiques du moteur 30 et, par exemple, à une valeur comprise entre 200 et 600 séquences par minute pouvant aller jusqu'à 800 séquences par minute pour certaines applications.

Ces deux programmes distincts, respectivement de base B et complet C, sont mémorisés dans la mémoire 57 pour pouvoir être appelés en fonction des besoins. A cette fin, et comme montré figure 4, le programmateur 55 est relié à un sélecteur de programme 58 qui, par actionnement d'un bouton 59, permet de choisir l'un ou l'autre des programmes B ou C, mais aussi de lancer un programme A d'avancement du fil 11 avec un mouvement uniforme, par exemple, dans la phase de son amenage de la bobine 17 à la torche 2.

Dans chacune des séquences précédemment décrites, de nombreux paramètres peuvent être modifiés pour adapter les conditions de soudage aux besoins. Toutefois, pour simplifier les réglages, les valeurs de ces paramètres, ajustées par l'expérimentation, sont liées à la valeur de la vitesse d'avance lente V1 qui est, en fait, la seule vitesse définissant la qualité de la soudure. Il en résulte que toute modification de cette vitesse entraîne la modification des autres paramètres. Ce réglage de la vitesse peut être effectué par un sélecteur 60 lié au programmateur 55 et comportant un bouton manuel 62.

Pour éviter que par ce réglage, l'opérateur choisisse des valeurs incompatibles avec les conditions de soudure, les valeurs V1a, V1b, ... de cette vitesse V1 mémorisées dans la mémoire 57 du programmateur et pouvant être sélectionnées sont réparties entre deux limites extrêmes L1 et L2, comme montré à la figure 5 montrant la valeur des vitesses pour différentes intensités d'alimentation de l'arc, mais aussi pour un diamètre de fil et une matière de fil définis. Hors de ces limites L1 et L2, le soudage est inopérant ou de mauvaise qualité et l'écart entre ces limites donne une plage de réglage par rapport à une valeur idéale, cette plage variant selon l'intensité du courant de l'arc, donc des conditions de soudage, entre plus ou moins 5 et plus ou moins 15 %. Cela permet donc à l'opérateur d'ajuster la vitesse V1, de manière que le dépôt du fil d'apport soit suffisant pour alimenter le bain de fusion, sans pour autant trop le refroidir et cela en fonction de la façon dont il tient sa torche, c'est à dire en fonction de l'intensité réelle de l'arc et de sa longueur, donc de la chaleur dégagée.

Le programmateur 55 comprend également une entrée raccordée à un sélecteur 63 déterminant la durée de l'avance lente. Cela permet de régler le chargement de la soudure, c'est à dire la quantité de métal fondu dans une unité de temps. Le programmateur 55 est relié à un afficheur 64 indiquant la vitesse moyenne de dépôt et à un afficheur 65 indiquant le taux de chargement. Ces deux afficheurs sont sous le contrôle du microprocesseur 56 qui, à partir des divers sélecteurs et des données mémorisées, calcule la vitesse moyenne et le taux de chargement.

Le programmateur 55 est encore relié à un sélecteur de paramétrage 66 qui permet à l'opérateur d'indiquer au programmateur la matière du fil d'apport et le diamètre de ce fil, de manière qu'après la sélection du programme ou séquence sur le sélecteur 58 et de la vitesse d'avance lente par le sélecteur 60, le microprocesseur définisse les valeurs des divers paramètres de fonctionnement du moteur pas à pas 30 adaptées aux paramètres de soudage. Cet agencement limite donc l'intervention humaine au réglage de la vitesse d'avance lente et de la durée de cette avance et laisse tous les autres réglages fonctionnels à la charge du programmateur dont la mémoire contient des valeurs tirées de l'expérimentation. Cela simplifie les réglages et garantit la réalisation de soudures de qualité.

Pour faciliter le réglage manuel, les diamètres et matière du fil sont groupés par catégories nécessitant des paramètres voisins.

Dans une réalisation particulière, et pour l'application du programme complet C le programmateur est relié à un sélecteur 67 par lequel il est possible de régler la durée de l'avance rapide et celle du recul rapide, alors choisies égales en valeur. Cela permet à l'opérateur ou à son encadrement de régler cette valeur, afin que la course d'avance et de recul, malgré les jeux entre gaine et fil, conserve sa valeur, définie par l'expérimentation pour chaque diamètre et matière du fil d'apport. Un tel réglage est particulièrement utile lorsque la distance entre le dévidoir et la torche est modifiée et par exemple passe de 3 mètres à 6 mètres.

La figure 8 montre que le cycle de séquence fourni par le programme de base B simplifié peut, dans une variante, comporter, après la dernière séquence normale Sn, une séquence supplémentaire Sn + 1 comprenant, après sa phase c de décélération :
- une phase l d'inversion de sens,
- une phase m d'accélération de la vitesse V0 à une vitesse supérieure V3,
- une phase n de retrait rapide, à vitesse V3, amenant l'extrémité du fil d'apport de sa position reculée en fin de séquence de travail à une position de retrait, encore plus reculée, l'éloignant de l'environnement de l'arc et, par exemple, le rentrant dans le guide fil,
- une phase p de décélération ramenant la vitesse de la valeur V3 à la valeur V0,
- et une phase q d'inversion de sens suivie par une phase d d'arrêt.

Dans ces conditions, la première séquence S1 du cycle de travail suivant se différencie des séquences suivantes S2, S3,...Sn par le fait que le temps du palier b à vitesse V1 est plus long en durée pour amener l'extrémité du fil d'apport de sa position rétractée à sa position de travail.

Comme le montre la figure 9, les mêmes dispositions peuvent être appliquées dans le programme complet C aux séquences S1 de début et Sn + 1 de fin de cycle du programme complet.

Dans la séquence S1 de début de cycle, la durée de la phase d'avance rapide e' à vitesse V2 est allongée, tandis que, dans la séquence finale Sn + 1, c'est la durée de la phase de recul rapide i' qui est allongée.

La figure 9 montre également qu'il est possible d'intercaler, dans le programme complet C et entre deux séquences standards du type représenté à la figure 7, une plage d'arrêt d', de durée réglable entre O et 0,1 s. Cette plage d'arrêt peut être incluse dans les programmes destinés aux travaux de soudage nécessitant un fort dégagement de chaleur pour éviter, encore, la formation d'une boule à l'extrémité du fil.

Comme montré sur les graphiques des figures 6 à 9, pour simplifier les programmes B et C, la vitesse V3 a une valeur égale à celle V2, mais bien entendu elle peut être différente.

Il ressort de ce qui précède que le procédé et le dispositif selon l'invention permettent de régler, avec précision et de manière répétitive, chacun des paramètres de chaque phase de chaque séquence, pour les adapter aux besoins du soudage, ce qui les différencie des dispositifs de l'état de la technique dans lesquels seuls certains paramètres peuvent être réglés.

## Revendications

1. Procédé pour alimenter en fil d'apport une torche de soudage (2), de type TIG, générant un bain de fusion (1) dans la ou les pièces (9a, 9b) devant recevoir un apport de métal, au moyen d'un arc électrique (14) engendré par une électrode infusible (5), distincte du fil d'apport (11), et consistant à déplacer le fil suivant une succession de séquences indépendantes des conditions d'alimentation électriques de l'électrode 5, **caractérisée en ce que** chaque séquence comprend au moins les phases suivantes :
- une accélération (a) de la vitesse nulle V0 à une vitesse constante V1,
- un palier (b) d'avance, dite lente, dont la vitesse V1 a une valeur réglable comprise entre 0,03 m/s et 0,15 m/s, amenant le fil d'apport (11) dans le bain en fusion (1), ce palier ayant une durée dépendant du taux de chargement de la soudure,
- une décélération (c) de la vitesse de la valeur V1 à V0,
- et une phase d'arrêt (d) dont la durée est inférieure à celle du palier (b) à vitesse V1, de manière que le rayonnement du bain de fusion (1) ne puisse former une boule à l'extrémité du fil d'apport.

2. Procédé selon la revendication 1, **caractérisé en ce que**, chaque séquence de déplacement du fil d'apport comprend :
- entre une phase d'accélération (a') plus longue que (a) et allant de la vitesse nulle V0 à une valeur V2 supérieure à V1, et le palier (b) d'avance lente à vitesse V1, un palier (e) d'avance rapide à vitesse V2, réglable, et une phase (c') de décélération de V2 à V1,
- et, après la phase de décélération de V1 à V0 et la phase d'arrêt (d), une phase (g) d'inversion du sens de déplacement du fil, une phase (h) d'accélération de V0 à V3, une phase (i) de retour rapide à vitesse V3, une phase (j) de décélération de V3 à V0, et une phase (k) d'inversion de sens.

3. Procédé selon l'une quelconque des revendications 1 et 2, **caractérisé en ce que** la phase d'arrêt (d, d') a une durée réglable comprise entre 0/seconde et 0,1/seconde.

4. Procédé selon la revendication 1, **caractérisé en ce que**, dans un cycle de soudage, la dernière séquence de déplacement du fil d'apport (11) comprend, juste avant la phase d'arrêt (d), une phase (1 ou g) d'inversion de sens, une phase (m ou h) d'accélération de la vitesse V0 à une vitesse de retrait rapide V3, une phase (n ou i) de retrait rapide à vitesse V3 pour amener l'extrémité du fil dans une position rétractée, plus éloignée que la position reculée qu'elle occupe à la fin de chaque séquence, tandis que la première séquence de chaque nouveau cycle d'entraînement du fil comprend, après la phase d'accélération initiale la ou a'), une augmentation de la durée de la phase d'avance (b ou e) à vitesse V1 ou V2 pour amener l'extrémité du fil en position de travail dans le bain (1).

5. Dispositif pour alimenter en fil d'apport une torche (2) de soudage TIG générant un bain de fusion (1) dans la pièce ou les pièces (9a, 9b) devant recevoir un apport de métal, au moyen d'un arc électrique (14) engendré par une électrode infusible (5), distincte du fil d'apport (11), et dans lequel le fil d'apport est dévidé d'une bobine (17) en une succession de séquences indépendantes des conditions d'alimentation électriques de l'électrode, ce dévidage étant réalisé par au moins un équipage de galets comprenant un galet d'entraînement (19) lié en rotation à un moteur électrique (30) et un galet presseur (20) plaquant le fil d'apport (11) sur le galet d'entraînement (19), **caractérisé en ce que** le moteur électrique (30) est un moteur pas à pas dont l'unité de commande (52) est pilotée par un programmateur (55) contenant un microprocesseur (56) et une mémoire (57) contenant, pour chaque matière et diamètre du fil d'apport (11), les paramètres d'alimentation du moteur (30) définis par expérimentation à partir des données de soudage, à savoir sens de rotation, valeur et durée des accélérations et décélérations, valeur et durée de la ou des vitesses de rotation, et durée des arrêts, ces paramètres étant traitées par au moins un programme de base (B) qui, selon les indications d'un sélecteur manuel (66) de la matière et du diamètre du fil d'apport, communique à l'unité de commande (52) une suite d'instructions procurant une séquence de mouvements comprenant les phases suivantes :
- accélération (d) d'une vitesse V0 à une vitesse V1, dite d'avance lente, comprise entre 0,03 m/s et 0,15 m/s,
- maintien de cette vitesse V1 pendant une durée réglable selon le taux de chargement de la soudure,
- décélération de la vitesse V1 à la vitesse V0,
- arrêt de la séquence, pendant une durée qui est inférieure à celle du palier à vitesse lente V1.

6. Dispositif selon la revendication 5, **caractérisé en ce que** la mémoire (57) du programmateur (55) comprend, en complément du programme de base, des instructions complémentaires formant un programme complet (C) apte à communiquer à l'unité de commande (52) du moteur pas à pas (30), et à partir des indications fournies par le sélecteur manuel (66) de la matière et du diamètre d'apport du fil, les paramètres de fonctionnement procurant une séquence de mouvements comprenant les phases suivantes :
- une phase d'accélération a' faisant démarrer le moteur et l'amenant d'une vitesse nulle V0 à une vitesse V2 dite d'avance rapide et dont la valeur est réglable,
- une phase e de maintien de cette vitesse V2 sur un palier dont la durée est réglable,
- une phase de décélération f ramenant la vitesse V2 à une valeur V1, précédemment définie comme étant celle de l'avance lente d'alimentation du bain fondu,
- une phase b' de maintien de cette vitesse V1 sur un palier de valeur réglable et définie par expérimentation,
- une phase de décélération c' amenant le moteur de la vitesse V1 à la vitesse V0,
- une phase g d'inversion du sens de rotation du moteur,
- une phase d'accélération h amenant la vitesse du moteur de la valeur V0 à une valeur V3, dite de retour rapide,
- une phase i de maintien de la vitesse V3 sur une durée réglable pour provoquer le recul rapide de l'extrémité du fil d'apport,
- une phase de décélération i ramenant la vitesse de sa valeur V3 à la valeur nulle V0,
- une phase k d'inversion de sens,
- et une phase d'arrêt d' pouvant être confondu avec la phase k) et avoir une valeur nulle.

7. Dispositif selon la revendication 6, **caractérisé en ce que** le programmateur (55) comprend, en plus des programmes respectivement de base (B) et complet (C), un programme (A) d'amenage du fil de la bobine (17) à la torche (2) et est relié à un sélecteur de programme (58) à actionnement manuel.

8. Dispositif selon l'une quelconque des revendications 5 à 7, **caractérisé en ce que** le programmateur (55) est relié à un sélecteur manuel (60) de la valeur de la vitesse d'avance lente V1, et un sélecteur manuel (63) de la durée du palier (b ou b') à vitesse lente V1.

9. Dispositif selon la revendication 8, **caractérisé en ce que** les valeurs de la vitesse lente V1 mémorisées dans la mémoire (57) et pouvant être choisies par le sélecteur de vitesse lente (60) sont, pour chaque matière et diamètre de fil d'apport, réparties entre deux limites extrêmes (L1, L2) procurant une plage de réglage de part et d'autre des valeurs idéales en rapport avec l'intensité du courant d'alimentation de l'arc (14).

10. Dispositif selon la revendication 5, **caractérisé en ce que** le programmateur (55) est relié à un afficheur (64) indiquant la vitesse moyenne de dépôt et à un afficheur (65) indiquant le taux de chargement.

11. Dispositif selon la revendication 6, **caractérisé en ce que** le programmateur (55) est relié à un sélecteur (67) de réglage de la durée respectivement du palier d'avance rapide (e) et du palier (i) de recul rapide.
